(19) Europäisches Patentamt
European Patent Office
Office européen des brevets

(11) **EP 3 684 585 B1**

(12) **EUROPÄISCHE PATENTSCHRIFT**

(45) Veröffentlichungstag und Bekanntmachung des Hinweises auf die Patenterteilung:
**27.10.2021  Patentblatt 2021/43**

(21) Anmeldenummer: **18731770.6**

(22) Anmeldetag: **08.06.2018**

(51) Int Cl.:
*B29C 48/92* (2019.01)        *B29C 48/355* (2019.01)
*B21C 37/20* (2006.01)        *B29C 48/11* (2019.01)

(86) Internationale Anmeldenummer:
**PCT/EP2018/065186**

(87) Internationale Veröffentlichungsnummer:
**WO 2019/057351 (28.03.2019 Gazette 2019/13)**

(54) **VERFAHREN UND VORRICHTUNG ZUR HERSTELLUNG EINES AUS PLASTISCHER MASSE BESTEHENDEN KREISZYLINDRISCHEN KÖRPERS**

METHOD AND DEVICE FOR PRODUCING A CIRCULAR-CYLINDRICAL BODY CONSISTING OF A PLASTIC COMPOUND

PROCÉDÉ ET DISPOSITIF DE FABRICATION D'UN CORPS CYLINDRIQUE CIRCULAIRE CONSTITUÉ D'UNE MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2017   DE 102017121940**

(43) Veröffentlichungstag der Anmeldung:
**29.07.2020   Patentblatt 2020/31**

(73) Patentinhaber: **Arno Friedrichs Hartmetall GmbH & Co. KG**
**95336 Mainleus (DE)**

(72) Erfinder: **FRIEDRICHS, Arno**
**95336 Mainleus (DE)**

(74) Vertreter: **Neilson, Martin Mark**
**Urquhart-Dykes & Lord LLP**
**Arena Point**
**Merrion Way**
**Leeds LS2 8PA (GB)**

(56) Entgegenhaltungen:
WO-A2-88/06089         DE-A1- 3 326 915
DE-A1- 10 260 136      JP-A- H02 138 404
JP-A- H08 127 056      US-A- 4 673 540

EP 3 684 585 B1

**Beschreibung**

Die Erfindung betrifft ein Verfahren und eine Vorrichtung zur Herstellung eines aus plastischer Masse bestehenden kreiszylindrischen Körpers.

Aus der EP 1 230 046 B1 sind ein Verfahren und eine Vorrichtung zur Herstellung eines aus plastischer Masse bestehenden, im Wesentlichen kreiszylindrischen Körpers, insbesondere eines Sintermetall-Rohlings bekannt, der mindestens eine im Inneren des Körpers verlaufende wendelförmige Innenausnehmung hat. Der Körper wird zunächst mit einem im Wesentlichen geradlinigen Verlauf der Innenausnehmung hergestellt, beispielsweise extrudiert. Der auf eine bestimmte Länge abgelängte Körper wird anschließend unter Abstützung über seine ganze Länge auf einer Auflage mit einer Reibflächenanordnung einer Wälzbewegung unterworfen, deren Geschwindigkeit sich über die Länge des Körpers linear und stetig ändert, wodurch der Körper gleichmäßig verdrillt wird.

Aus der EP 2 313 218 B1 sind ein weiteres Verfahren und eine weitere Vorrichtung zur Herstellung eines aus plastischer Masse bestehenden kreiszylindrischen Körpers, der mindestens eine im Inneren des Körpers verlaufende wendelförmige Innenausnehmung hat, bekannt. Auch hierbei wird der Körper zunächst mit einem geradlinigen Verlauf der Innenausnehmung hergestellt. Der auf eine bestimmte Länge abgelängte Körper wird anschließend unter Abstützung auf seiner ganzen Länge auf einer Auflage mittels einer ebenfalls über dessen ganzen Länge angrenzenden Reibflächenanordnung mit einer parallel zur Auflage angeordneten Reibungsfläche einem Wälzvorgang unterworfen. Dieser Wälzvorgang erfolgt in mehreren Schritten, wobei in einem ersten Schritt eine Wälzbewegung unter Verwendung einer ersten Drehachse der Reibflächenanordnung und in einem zweiten Schritt eine Wälzbewegung unter Verwendung einer zweiten, von der ersten Drehachse verschiedenen Drehachse der Reibflächenanordnung erfolgt, wobei die Drehachsen senkrecht zur Auflage bzw. zur Reibungsfläche verlaufen. Die Druckschriften JP H02 138404 A, WO 88/06089 A2 und JP H08 127056 A offenbaren weitere Verfahren und Vorrichtungen zur Herstellung eines aus plastischer Masse bestehenden kreiszylindrischen Körpers.

Die Aufgabe der Erfindung besteht darin, ein Verfahren und eine Vorrichtung zur Herstellung eines aus plastischer Masse bestehenden kreiszylindrischen Körpers mit einer oder mehreren wendelförmigen Innenausnehmungen anzugeben, bei denen die Herstellung der wendelförmigen Innenausnehmungen vereinfacht ist.

Diese Aufgabe wird durch ein Verfahren mit den im Anspruch 1 angegebenen Merkmalen sowie durch eine Vorrichtung mit den im Anspruch 6 angegebenen Merkmalen gelöst. Vorteilhafte Ausgestaltungen und Weiterbildungen der Erfindung sind in den abhängigen Ansprüchen angegeben.

Bei dem erfindungsgemäßen Verfahren zur Herstellung eines aus plastischer Masse bestehenden kreiszylindrischen Körpers, der mindestens eine in seinem Inneren verlaufende wendelförmige Innenausnehmung aufweist, werden die Schritte gemäß dem Anspruch 1 durchgeführt.

Gemäß der Erfindung wird die um ihre Längsachse drehbare Festhalte- und Transportvorrichtung von zwei Motoren angesteuert, von denen einer ein Vorschubmotor ist, der die Geschwindigkeit des Vorschubs des kreiszylindrischen Körpers in der drehbaren Festhalte- und Transportvorrichtung steuert, und der andere ein Drehmotor ist, der zeitgleich zum Vorschub des kreiszylindrischen Körpers in Längsrichtung die Drehgeschwindigkeit der um ihre Längsachse drehbaren Festhalte- und Transportvorrichtung steuert.

Gemäß einer Ausführungsform der Erfindung wird der kreiszylindrische Körper innerhalb der Festhalte- und Transportvorrichtung von Transportbändern gehalten und in Richtung seiner Längsachse fortbewegt.

Gemäß einer Ausführungsform der Erfindung sind die Transportbänder auf Umlenkrollen gelagert, deren Laufgeschwindigkeit zur Fortbewegung des kreiszylindrischen Körpers vom Vorschubmotor eingestellt wird.

Gemäß einer Ausführungsform der Erfindung wird der kreiszylindrische Körper innerhalb der Festhalte- und Transportvorrichtung von zwei, drei oder vier mit einheitlicher Laufgeschwindigkeit bewegten Transportbändern gehalten und in Richtung seiner Längsachse fortbewegt.

Gemäß der Erfindung werden die Vorschubgeschwindigkeit und die Drehgeschwindigkeit der Festhalte- und Transportvorrichtung von einer Steuereinheit eingestellt, welche dem Vorschubmotor und dem Drehmotor Steuersignale zuführt.

Gemäß einer Ausführungsform der Erfindung wird die Auspressgeschwindigkeit des kreiszylindrischen Körpers aus dem Strangpresswerkzeug mittels eines Geschwindigkeitssensors gemessen und in der Steuereinheit als Soll-Vorschubgeschwindigkeit eingestellt.

Die Geschwindigkeit der Transportbänder und die Drehgeschwindigkeit der Festhalte- und Transportvorrichtung werden fortwährend an die durch den Geschwindigkeitssensor gemessene Auspressgeschwindigkeit und/oder den Stabdurchmesser des aus dem Strangpresswerkzeug austretenden plastischen kreiszylindrischen Körper angepasst, um die jeweils gewünschten Steigungsvorgaben einzuhalten.

Gemäß einer Ausführungsform der Erfindung wird der kreiszylindrische Körper mittels einer Schneidevorrichtung auf eine vorgegebene Länge abgelängt, wobei das Ablängen zwischen dem Strangpresswerkzeug und der drehbaren Festhalte- und Transportvorrichtung oder zwischen der drehbaren Festhalte- und Transportvorrichtung und der Ablagevorrichtung vorgenommen wird.

Eine erfindungsgemäße Vorrichtung zur Herstellung eines aus plastischer Masse bestehenden kreiszylindrischen Körpers, der mindestens eine in seinem Inneren verlaufende wendelförmige Ausnehmung aufweist, weist die Merkmale des Anspruchs 6 auf.

Gemäß der Erfindung weist die Vorrichtung des Weiteren einen Vorschubmotor, der zur Steuerung der Vorschubgeschwindigkeit des kreiszylindrischen Körpers in der drehbaren Festhalte- und Transportvorrichtung ausgebildet ist, und einen Drehmotor auf, der zur Steuerung der Drehgeschwindigkeit der um ihre Längsachse drehbaren Festhalte- und Transportvorrichtung ausgebildet ist.

Gemäß einer Ausführungsform der Erfindung weist die Festhalte- und Transportvorrichtung Transportbänder auf, die zum Festhalten und zur Fortbewegung des kreiszylindrischen Körpers in seiner Längsrichtung ausgebildet sind.

Gemäß einer Ausführungsform der Erfindung sind die Transportbänder auf Umlenkrollen gelagert, deren Laufgeschwindigkeit mittels des Vorschubmotors einstellbar ist.

Gemäß einer Ausführungsform der Erfindung weist die Vorrichtung zwei, drei oder vier in Umfangsrichtung des kreiszylindrischen Körpers verteilte Transportbänder auf, die vorzugsweise äquidistant verteilt sind.

Gemäß der Erfindung weist die Vorrichtung eine Steuereinheit auf, die dazu ausgebildet ist, dem Vorschubmotor und dem Drehmotor Steuersignale zur Einstellung der Vorschubgeschwindigkeit und der Drehgeschwindigkeit zuzuführen.

Eine Ausführungsform der Erfindung besteht darin, dass die Vorrichtung eine Schneidevorrichtung zur Ablängung des kreiszylindrischen Körpers aufweist, welche zwischen dem Strangpresswerkzeug und der Festhalte- und Transportvorrichtung oder zwischen der drehbaren Festhalte- und Transportvorrichtung und der Ablagevorrichtung angeordnet ist.

Die Vorteile der Erfindung bestehen insbesondere darin, dass die Verdrallung des aus plastischer Masse bestehenden kreiszylindrischen Körpers nur sehr wenig Platz benötigt. Sie kann auf der zwischen dem Strangpresswerkzeug und der Festhalte- und Transportvorrichtung vorgesehenen Verdrallstrecke durchgeführt werden, wobei zur Bereitstellung dieser Verdrallstrecke nur sehr wenig Platz zwischen dem Strangpresswerkzeug und der Festhalte- und Transportvorrichtung benötigt wird. Des Weiteren eröffnet die Erfindung die Möglichkeit, durch eine Veränderung der Drehgeschwindigkeit der Festhalte- und Transportvorrichtung während des Verdrallvorganges kreiszylindrische Körper herzustellen, bei denen sich der Steigungswinkel der im Inneren des kreiszylindrischen Körpers verlaufenden wendelförmigen Innenausnehmungen verändert. Dies hat den Vorteil, dass mittels des erfindungsgemäßen Verfahrens beispielsweise Rohlinge für Hartmetallbohrer hergestellt werden können, bei denen sich im Schneidenbereich vergleichsweise dicht gedrängte Kühlkanäle befinden, so dass die Werkzeugschneide optimal ausgebildet werden kann und im weiteren Verlauf der Werkzeugspankammer durch größere Steigungsabstände die Spanabfuhr verbessert werden kann.

Weitere Vorteile der Erfindung bestehen darin, dass die erfindungsgemäße Vorrichtung platzsparend aufgebaut werden kann.

Weitere vorteilhafte Eigenschaften der Erfindung ergeben sich aus deren beispielhafter Erläuterung anhand der Figuren. Es zeigt:

- Fig. 1 eine Blockdarstellung einer Vorrichtung zur Herstellung eines aus plastischer Masse bestehenden kreiszylindrischen Körpers, der in seinem Inneren eine oder mehrere wendelförmige Innenausnehmungen aufweist, unter Verwendung eines Verdrallvorganges,

- Fig. 2 eine erste, perspektivische Darstellung zur Erläuterung des Verdrallvorganges,

- Fig. 3 eine zweite, perspektivische Darstellung zur Erläuterung des Verdrallvorganges,

- Fig. 4 eine dritte Darstellung zur Erläuterung des Verdrallvorganges,

- Fig. 5 eine vierte Darstellung zur Erläuterung des Verdrallvorganges,

- Fig. 6 eine fünfte, perspektivische Darstellung zur Erläuterung des Verdrallvorganges und

- Fig. 7 eine sechste Darstellung zur Erläuterung des Verdrallvorganges.

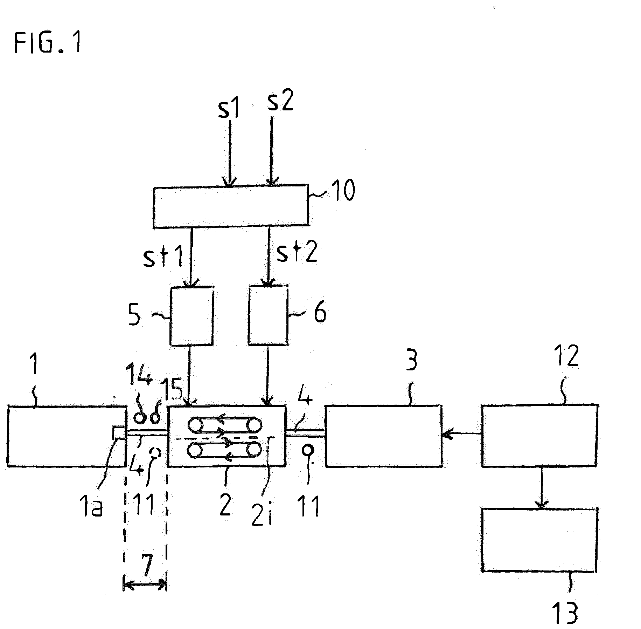

Die Figur 1 zeigt eine Blockdarstellung einer Vorrichtung zur Herstellung eines aus plastischer Masse bestehenden kreiszylindrischen Körpers, der in seinem Inneren eine oder mehrere wendelförmige Innenausnehmungen aufweist. Bei diesem aus plastischer Masse bestehenden kreiszylindrischen Körper handelt es sich insbesondere um einen Sintermetall-Rohling, der beispielsweise aus einem Hartmetallpulver mit eingeknetetem Binde- bzw. Klebemittel besteht. Dieser Sintermetall-Rohling hat eine verhältnismäßig weiche Konsistenz, so dass dessen Handhabung, beispielsweise ein Transport, sehr vorsichtig erfolgen muss, um irreversible Verformungen des Rohlings zu verhindern.

Sintermetall-Rohlinge werden insbesondere zur Herstellung von Bohr- und Fräswerkzeugen bzw. Bohrwerkzeugeinsätzen aus Hartmetall, Stahl oder keramischen Werkstoffen benötigt. Durch den wendelförmigen Verlauf der zumindest einen Innenausnehmung, die beim fertigen Bohrwerkzeug zur Zufuhr von Kühl- oder Schmiermittel in den Schneidenbereich dient, kann das Bohrwerkzeug auf seinem Außenmantel mit wendelförmigen Spannuten ausgestattet werden, was oftmals zur Bereitstellung günstiger Schnitt- und Zerspanungseigenschaften von Vorteil ist und deshalb angestrebt wird.

Bei der Herstellung solcher Werkzeugrohlinge kommt es darauf an, dass der Steigungswinkel der zumindest einen wendelförmigen Innenausnehmung über die gesamte Länge des Rohlings innerhalb eng tolerierter Grenzen gehalten wird. Dies ist unter anderem deshalb erforderlich, weil in den Werkzeugrohling nach dem Sinterprozess regelmäßig Spannuten eingeschliffen werden. Dieses Einschleifen erfolgt mit weitgehend automatisierten Maschinen, so dass sich bei ungenauer Herstellung der wendelförmigen Innenausnehmungen eine hohe Ausschussrate ergeben kann.

Die in der Figur 1 dargestellte Vorrichtung erlaubt es, den Steigungswinkel der zumindest einen wendelförmigen Innenausnehmung über die gesamte Länge des Rohlings innerhalb eng tolerierter Grenzen zu halten. Die gezeigte Vorrichtung weist ein Strangpresswerkzeug 1 auf, welches an seinem Ausgang über eine Düse 1a einen aus plastischer Masse bestehenden kreiszylindrischen Körper 4 ausgibt, der in seinem Inneren eine oder mehrere geradlinig verlaufende Innenausnehmungen aufweist.

Dieser aus dem Strangpresswerkzeug 1 ausgegebene kreiszylindrische Körper 4 wird über eine Verdrallstrecke 7, die sich vom Ausgang des Strangpresswerkzeugs 1 bis zum Eingang einer Festhalte- und Transportvorrichtung 2 erstreckt, zu dieser Festhalte- und Transportvorrichtung 2 geführt.

Dort wird er - wie noch unten anhand der weiteren Figuren erläutert wird - festgehalten und weitertransportiert. Während dieses Weitertransportes des kreiszylindrischen Körpers 4 erfolgt eine Drehung der Festhalte- und Transportvorrichtung 2 um ihre Längsmittelachse 2i. Aufgrund dieser Drehung der Festhalte- und Transportvorrichtung 2 um ihre Längsmittelachse bei gleichzeitigem Weitertransport des kreiszylindrischen Körpers 4 innerhalb der Festhalte- und Transportvorrichtung 2 erfolgt eine Verdrallung des kreiszylindrischen Körpers 4 auf der Verdrallstrecke 7, d.h. im Bereich zwischen dem Strangpresswerkzeug 1 und der Festhalte- und Transportvorrichtung 2.

Dieses Weitertransportieren und Verdrallen wird fortgesetzt, bis der kreiszylindrische Körper 4 den Ausgang der Festhalte- und Transportvorrichtung 2 erreicht hat. Dort wird er nach erfolgter Ablängung auf die gewünschte Länge in Form eines kreiszylindrischen Körpers, der in seinem Inneren eine oder mehrere wendelförmige Innenausnehmungen aufweist, ausgegeben und einer Ablagevorrichtung 3 zugeführt.

Zur Entnahme des in seinem Inneren mindestens eine kreiszylindrische Innenausnehmung aufweisenden kreiszylindrischen Körpers aus der Ablagevorrichtung 3 wird ein Entnahmeroboter 12 verwendet, der den kreiszylindrischen Körper 4 aus der Ablagevorrichtung 3 entnimmt und einer Lagervorrichtung 13 zuführt. Dort kann eine Zwischenlagerung des kreiszylindrischen Körpers erfolgen oder auch eine Weiterverarbeitung, beispielsweise ein Sintervorgang.

Die genannte Ablängung des kreiszylindrischen Körpers auf die jeweils gewünschte Länge erfolgt unter Verwendung einer Schneidevorrichtung 11, die entweder im Bereich der Verdrallstrecke 7 zwischen dem Strangpresswerkzeug 1 und der Festhalte- und Transportvorrichtung 2 angeordnet ist oder im Bereich zwischen der Festhalte- und Transportvorrichtung 2 und der Ablagevorrichtung 3.

Des Weiteren weist die in der Figur 1 gezeigte Vorrichtung einen Geschwindigkeitssensor 14 auf, der zwischen dem Ausgang des Strangpresswerkzeugs 1 und der Festhalte- und Transportvorrichtung 2 angeordnet ist und die Auspressgeschwindigkeit des das Strangpresswerkzeug 1 verlassenden kreiszylindrischen Körpers 4 misst. Ferner weist die in der Figur 1 gezeigte Vorrichtung einen Durchmessersensor 15 auf, der ebenfalls zwischen dem Ausgang des Strangpresswerkzeugs 1 und der Festhalte- und Transportvorrichtung 2 angeordnet ist und den Durchmesser des das Strangpresswerkzeug verlassenden kreiszylindrischen Körpers 4 misst.

Die von diesen Sensoren abgeleiteten Sensorsignale s1 und s2 werden einer Steuereinheit 10 zugeführt. Diese ist dazu ausgebildet, die ihr zugeführten Sensorsignale mit einem vorgegebenen Sollsteigungswert, der sich aus der Transportgeschwindigkeit und der Drehgeschwindigkeit der Festhalte- und Transportvorrichtung ergibt, in Einklang zu bringen.

Die Transportgeschwindigkeit ist dabei durch die vom Geschwindigkeitssensor ermittelte Auspressgeschwindigkeit vorgegeben. Die Drehgeschwindigkeit $\omega$ der Festhalte- und Transportvorrichtung wird unter Verwendung der folgenden Beziehungen ermittelt:

$$\omega = 360° / tst;$$

$$tst = lst / vp$$

$$lst = d \bullet \pi / \tan(sw) .$$

Dabei sind:

$\omega$ die Drehgeschwindigkeit,
tst die Steigungszeit,
lst die Steigungslänge,
vp die Auspressgeschwindigkeit,
d der Durchmesser des aus dem Strangpresswerkzeug ausgepressten Körpers,
sw der Steigungswinkel und
tan(sw) der Tangens des Steigungswinkels.

Unter der Steigungslänge lst ist dabei die Länge einer Periode der Steigung entlang der Mittelachse des zylindrischen Körpers zu verstehen. Bei dem Steigungswinkel handelt es sich um den Winkel zwischen der Mittelachse des zylindrischen Körpers und dem Steigungsverlauf. Die Steigungszeit ist diejenige Zeit, die für das Pressen einer Steigungslänge benötigt wird.

In der Figur 1 ist des Weiteren ein Drehmotor 6 dargestellt, der von der Steuereinheit 10 mit Steuersignalen st2 beaufschlagt wird. Dieser Drehmotor 6 bewirkt die Drehung der drehbaren Festhalte- und Transportvorrichtung 2 mit einer von der Steuereinheit 10 vorgegebenen Drehgeschwindigkeit. Durch eine geänderte Ansteuerung des Drehmotors 6 kann die Drehgeschwindigkeit der drehbaren Festhalte- und Transportvorrichtung 2 bei Bedarf erhöht oder erniedrigt werden.

Dies kann beispielsweise zu dem Zweck erfolgen, den Steigungswinkel der im Inneren des kreiszylindrischen Körpers verlaufenden Innenausnehmungen über die Länge des kreiszylindrischen Körpers zu erhöhen oder zu erniedrigen, um einen aus plastischer Masse bestehenden kreiszylindrischen Körper mit wendelförmig verlaufenden Innenausnehmungen herzustellen, deren Steigungswinkel sich über die Länge des kreiszylindrischen Körpers verändert.

Des Weiteren kann auch ein in der Figur 1 nicht dargestellter Drehgeschwindigkeitssensor vorgesehen sein, der die Drehgeschwindigkeit der Festhalte- und Transportvorrichtung 2 misst. Das von diesem Drehgeschwindigkeitssensor abgeleitete Drehgeschwindigkeitssensorsignal wird der Steuereinheit 10 zugeführt. Diese ist dazu ausgebildet, das ihr zugeführte Drehgeschwindigkeitsmesssignal mit einem vorgegebenen Solldrehgeschwindigkeitssignal zu vergleichen. Weicht die gemessene Drehgeschwindigkeit von der Solldrehgeschwindigkeit ab, dann stellt die Steuereinheit 10 dem Drehmotor 6 Steuersignale st2 derart bereit, dass der Drehmotor 6 die Geschwindigkeit der Drehbewegung der Festhalte- und Transportvorrichtung 2 adaptiert bzw. regelt. Auch dies erhöht die Genauigkeit und damit die Qualität der mittels des erfindungsgemäßen Verfahrens hergestellten, im Inneren eines kreiszylindrischen Körpers wendelförmig verlaufenden Innenausnehmungen.

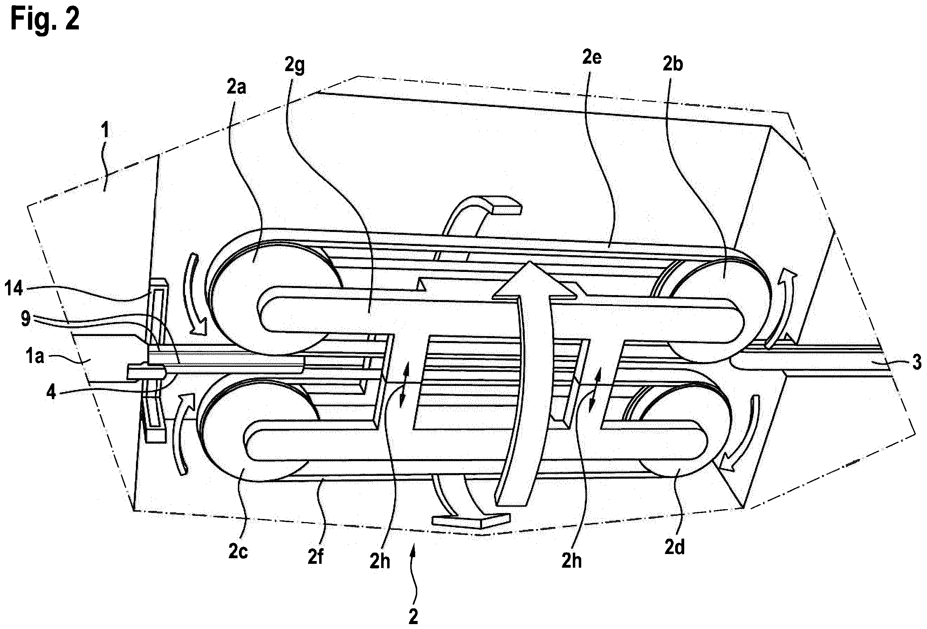

Die Figur 2 zeigt eine erste perspektivische Darstellung zur Erläuterung des Verdrallvorganges des vom Strangpresswerkzeug 1 ausgegebenen kreiszylindrischen Körpers 4. Dieser von der Düse 1a des Strangpresswerkzeugs 2 ausgegebene kreiszylindrische Körper wird über die Verdrallstrecke 7, die sich vom Ausgang der Düse 1a des Strangpresswerkzeugs 1 bis zum Eingang der Festhalte- und Transportvorrichtung 2 erstreckt, geführt und in der Festhalte- und Transportvorrichtung 2 von deren auf Umlenkrollen 2a und 2c geführten Transportbändern 2e und 2f erfasst und zwischen diesen Transportbändern festgehalten. Aufgrund der durch Pfeile veranschaulichten Drehung der Umlenkrollen 2a und 2c wird der kreiszylindrische Körper 4 in Vorwärtsrichtung weiter transportiert. Gleichzeitig zu dieser Vorwärtsbewegung des kreiszylindrischen Körpers 4 innerhalb der Festhalte- und Transportvorrichtung erfolgt eine Drehung der Festhalte- und Transportvorrichtung 2 um ihre in der Figur 2 nicht dargestellte Längsmittelachse 2i. Diese Drehung ist in der Figur 2 durch die in Umfangsrichtung der Festhalte- und Transportvorrichtung 2 gerichteten Pfeile veranschaulicht.

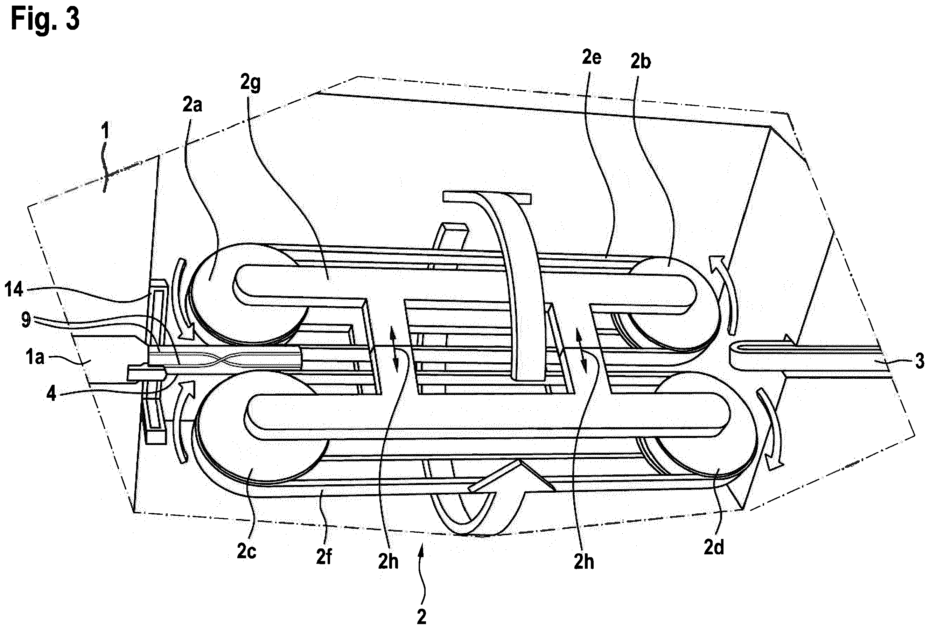

Durch die beschriebene Vorwärtsbewegung des kreiszylindrischen Körpers 4 innerhalb der Festhalte- und Transportvorrichtung bei gleichzeitiger Drehung der Festhalte- und Transportvorrichtung 2 erfolgt eine Verdrallung des kreiszylindrischen Körpers 4 auf der Verdrallstrecke 7, wie es noch unten anhand der Figur 3 erläutert wird.

Die in der Figur 2 dargestellte Festhalte- und Transportvorrichtung 2 weist des Weiteren eine weitere Umlenkrolle 2b auf, wobei das bereits genannte Transportband 2e um die Umlenkrollen 2a und 2b gelegt ist.

Ferner weist die in der Figur 2 gezeigte Festhalte- und Transportvorrichtung 2 eine weitere Umlenkrolle 2d auf, wobei das bereits genannte Transportband 2f um die Umlenkrollen 2c und 2d gelegt ist. Die Umlenkrollen 2a, 2b, 2c und 2d sind auf einem als Umlenkrollenlagerung dienenden Drehgestell 2g gelagert.

Der zwischen den beiden Transportbändern 2e und 2f festgehaltene und in Vorwärtsrichtung weiter transportierte kreiszylindrische Körper 4 wird am Ausgang der Festhalte- und Transportvorrichtung 2 ausgegeben und an die Ablagevorrichtung 3 weitergegeben.

Des Weiteren weist das Drehgestell 2g der Festhalte- und Transportvorrichtung 2 Abstandsverstellmittel 2h auf, mittels derer der Abstand zwischen den Transportrollen 2a und 2c sowie der Abstand zwischen den Transportrollen 2b und 2d verstellt werden kann. Dies hat den Vorteil, dass die Festhalte- und Transportvorrichtung 2 auch zusammen mit anderen Strangpresswerkzeugen verwendet werden kann, die kreiszylindrische Körper mit größerem oder auch kleinerem Durchmesser zur Verfügung stellen.

Die Figur 3 zeigt eine zweite perspektivische Darstellung zur Erläuterung des Verdrallvorganges des vom Strangpesswerkzeug 1 ausgegebenen kreiszylindrischen Körpers 4. Aus dieser Figur 3 ist insbesondere ersichtlich, dass der zwischen den beiden Transportbändern 2e und 2f gehaltene kreiszylindrische Körper 4 im Vergleich zu der Figur 2 bei bereits erfolgter Drehung der Festhalte- und Transportvorrichtung 2 vorwärts bewegt wurde und dass auf der Verdrallstrecke 7 bereits eine Verdrallung des kreiszylindrischen Körpers 4 stattgefunden hat, so dass auch die im Inneren des kreiszylindrischen Körpers vorgesehenen Innenausnehmungen 9 eine Verdrallung aufweisen.

Diese Verdrallung wird durch eine weitere Vorwärtsbewegung des kreiszylindrischen Körpers innerhalb der Festhalte- und Transportvorrichtung 2 bei gleichzeitig erfolgender weiterer Drehung der Festhalte- und Transportvorrichtung um ihre Längsmittelachse weiter fortgesetzt, bis der kreiszylindrische Körper schließlich von der Festhalte- und Transportvorrichtung 2 ausgegeben und an die Ablagevorrichtung 3 ausgegeben wird.

Zur Entnahme des aus plastischer Masse bestehenden kreiszylindrischen Körpers aus der Ablagevorrichtung 3 ist ein Entnahmeroboter 12 vorgesehen, der den kreiszylindrischen Körper aus der Ablagevorrichtung 3 entnimmt und einer Lagervorrichtung 13 zuführt, in welcher auch eine Weiterverarbeitung des kreiszylindrischen Körpers 4 erfolgen kann, beispielsweise ein Sintern.

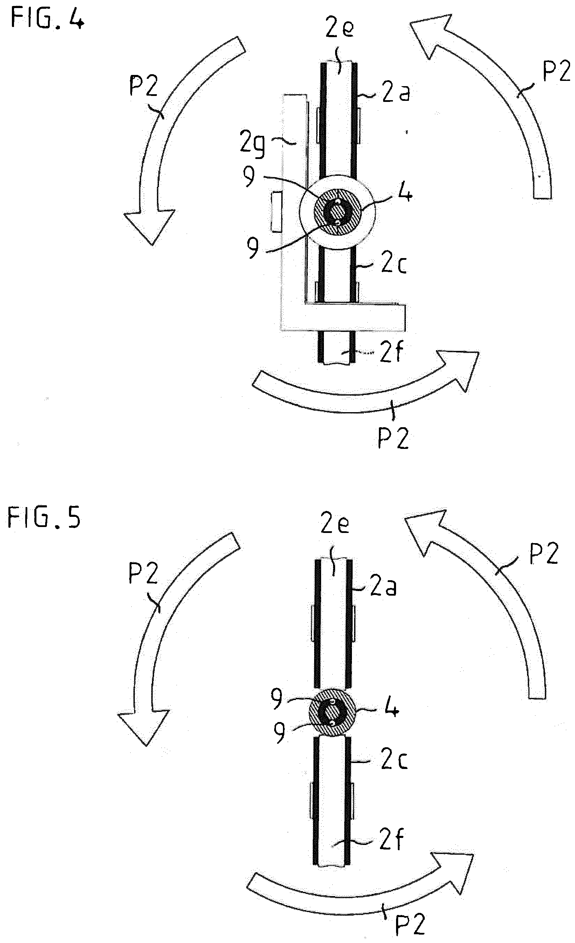

Die Figur 4 zeigt eine dritte, vereinfachte Darstellung zur Erläuterung des Verdrallvorganges. In dieser Darstellung sind das Drehgestell 2g der Festhalte- und Transportvorrichtung 2, die auf diesem Drehgestell befestigten Umlenkrollen 2a und 2c, die um diese Umlenkrollen gelegten und von diesen bewegten Transportbänder 2e und 2f und der von den Transportbändern gehaltene und vorwärts transportierte kreiszylindrische Körper 4 mit seinen Innenausnehmungen 9 gezeigt. Des Weiteren sind Pfeile P2 dargestellt, welche die Drehung der in der Figur 4 dargestellten Bauteile um die sich in die Zeichenebene hinein erstreckende Längsmittelachse der Festhalte- und Transportvorrichtung veranschaulichen.

Die Figur 5 zeigt eine vierte, weiter vereinfachte Darstellung zur Erläuterung des Verdrallvorganges, in welcher die Bestandteile der Festhalte- und Transportvorrichtung nicht enthalten sind. In dieser Darstellung sind die Umlenkrollen 2a und 2c, die um diese Umlenkrollen gelegten und von diesen bewegten Transportbänder 2e und 2f und der von den Transportbändern gehaltene und vorwärts transportierte kreiszylindrische Körper 4 mit seinen Innenausnehmungen 9 gezeigt. Des Weiteren sind Pfeile P2 dargestellt, welche die Drehung der in der Figur 5 gezeigten Bauteile um die sich in die Zeichenebene hinein erstreckende Längsmittelachse der Festhalte- und Transportvorrichtung veranschaulichen.

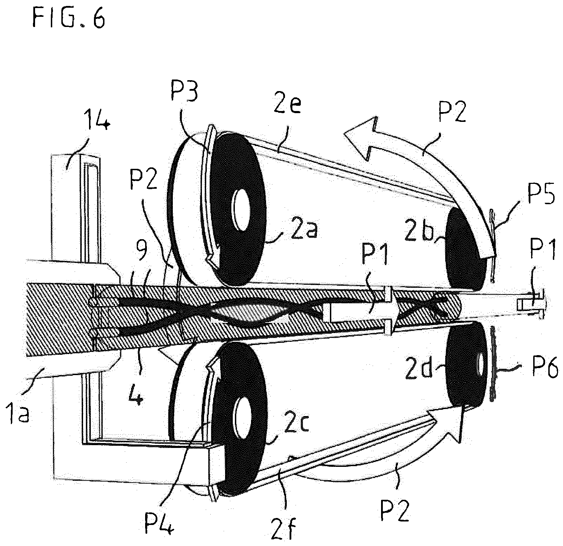

Die Figur 6 zeigt eine fünfte, perspektivische Darstellung zur Erläuterung des Verdrallvorganges. In dieser Darstellung sind die Düse 1a des Strangpresswerkzeugs, der Geschwindigkeitssensor 14, der kreiszylindrische Körper 4 mit seinen Innenausnehmungen 9, die Umlenkrollen 2a und 2b und das um diese gelegte und auf diesen transportierte Transportband 2e, die Umlenkrollen 2c und 2d und das um diese gelegte und auf diesen transportierte Transportband 2f gezeigt. Des Weiteren sind Pfeile P2 dargestellt, welche die Drehung der zur Festhalte- und Transportvorrichtung gehörenden Bauteile mitsamt dem darin gehaltenen und darin transportierten kreiszylindrischen Körper 4 um die Längsmittelachse der Festhalte- und Transportvorrichtung 2 veranschaulichen. Ferner sind Pfeile P1 gezeigt, die die Richtung der Vorwärtsbewegung des in der Festhalte- und Transportvorrichtung gehaltenen kreiszylindrischen Körpers 4 veranschaulichen. Ferner sind in der Figur 6 ein Pfeil P3, der die Drehrichtung der Umlenkrolle 2a, ein Pfeil P4, der die Drehrichtung der Umlenkrolle 2c, ein Pfeil P5, der die Drehrichtung der Umlenkrolle 2b und ein Pfeil P6, der die Drehrichtung der Umlenkrolle 2d veranschaulicht, gezeigt. Des Weiteren ist in der Figur 6 der kreiszylindrische Körper 4 in einer innerhalb der Festhalte- und Transportvorrichtung im Vergleich zu den Figuren 2 und 3 bereits weiter transportierten Position gezeigt. Es ist ersichtlich, dass in dieser bereits weiter transportierten Position die Innenausnehmungen des kreiszylindrischen Körpers bereits mehrfach wendelförmig verdrallt sind.

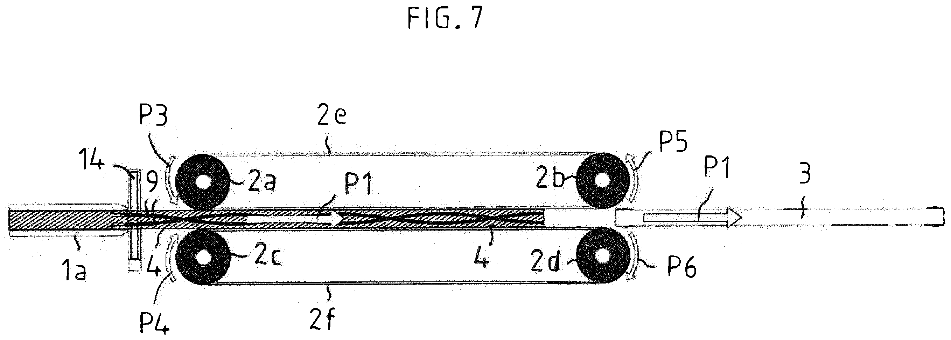

Die Figur 7 zeigt eine sechste Darstellung zur Erläuterung des Verdrallvorganges. Auch in dieser Darstellung sind die Düse 1a des Strangpresswerkzeugs, der Geschwindigkeitssensor 14, der kreiszylindrische Körper 4 mit seinen Innenausnehmungen 9, die Umlenkrollen 2a und 2b und das um diese gelegte und auf diesen transportierte Transportband 2e, die Umlenkrollen 2c und 2d und das um diese gelegte und auf diesen transportierte Transportband 2f gezeigt. Ferner sind Pfeile P1 gezeigt, die die Richtung der Vorwärtsbewegung des in der Festhalte- und Transportvorrichtung gehaltenen kreiszylindrischen Körpers 4 veranschaulichen. Ferner sind in der Figur 6 ein Pfeil P3, der die Drehrichtung der Umlenkrolle 2a, ein Pfeil P4, der die Drehrichtung der Umlenkrolle 2c, ein Pfeil P5, der die Drehrichtung der Umlenkrolle 2b und ein Pfeil P6, der die Drehrichtung der Umlenkrolle 2d veranschaulicht, gezeigt. Des Weiteren ist in der Figur 7 der kreiszylindrische Körper 4 in einer innerhalb der Festhalte- und Transportvorrichtung im Vergleich zu den Figuren 2 und 3 bereits weiter transportierten Position gezeigt. Es ist ersichtlich, dass in dieser bereits weiter transportierten Position die Innenausnehmungen des kreiszylindrischen Körpers bereits mehrfach wendelförmig verdrallt sind. Ferner ist in der Figur 7 die hinter der Festhalte- und Transportvorrichtung positionierte Ablagevorrichtung 3 veranschaulicht.

Bezugszeichenliste

| 1 | Strangpresswerkzeug |
|---|---|
| 1a | Düse |
| 2 | Festhalte- und Transportvorrichtung |
| 2a | Umlenkrolle |
| 2b | Umlenkrolle |
| 2c | Umlenkrolle |
| 2d | Umlenkrolle |
| 2e | Transportband |
| 2f | Transportband |
| 2g | Drehgestell, Umlenkrollenlagerung |
| 2h | Abstandsverstellmittel |
| 2i | Längsmittelachse der Festhalte- und Transportvorrichtung |
| 3 | Ablagevorrichtung |
| 4 | kreiszylindrischer Körper |
| 5 | Vorschubmotor |
| 6 | Drehmotor |
| 7 | Verdrallstrecke |
| 9 | Innenausnehmung |
| 10 | Steuereinheit |

11 Schneidevorrichtung
12 Entnahmeroboter
13 Lagervorrichtung
14 Geschwindigkeitssensor
15 Durchmessersensor
P1,...,P6 Richtungspfeile
s1 Geschwindigkeitssensorsignal
s2 Durchmessersensorsignal
st1 Steuersignal
st2 Steuersignal

**Patentansprüche**

1. Verfahren zur Herstellung eines aus plastischer Masse bestehenden kreiszylindrischen Körpers (4), der mindestens eine in seinem Inneren verlaufende wendeiförmige Innenausnehmung (9) aufweist, mit folgenden Schritten:

- Herstellen eines aus plastischer Masse bestehenden kreiszylindrischen Körpers (4), der mindestens eine in seinem Inneren verlaufende geradlinige Innenausnehmung aufweist, mittels eines Strangpresswerkzeugs (1),
- Ausgabe des kreiszylindrischen Körpers (4) aus dem Strangpresswerkzeug (1) über eine Verdrallstrecke (7) an eine zum Festhalten und Transportieren des kreiszylindrischen Körpers (4) ausgebildete, um ihre Längsachse (2i) drehbare Festhalte- und Transportvorrichtung (2),
- Verdrallen des kreiszylindrischen Körpers (4) auf der Verdrallstrecke (7) zur Bildung der mindestens einen wendeiförmigen Innenausnehmung (9) durch ein Drehen der Festhalte- und Transportvorrichtung (2) mit darin gehaltenem und transportiertem kreiszylindrischem Körper (4) und
- Ausgabe des kreiszylindrischen Körpers (4), der mindestens eine in seinem Inneren verlaufende wendeiförmige Innenausnehmung (9) aufweist, aus der Festhalte- und Transportvorrichtung (2) an eine Ablagevorrichtung (3), wobei
- die um ihre Längsachse (2i) drehbare Festhalte- und Transportvorrichtung (2) von zwei Motoren angesteuert wird, von denen einer ein Vorschubmotor (5) ist, der die Geschwindigkeit des Vorschubs des kreiszylindrischen Körpers (4) in der drehbaren Festhalte- und Transportvorrichtung (2) steuert, und der andere ein Drehmotor (6) ist, der zeitgleich zum Vorschub des kreiszylindrischen Körpers (4) in Längsrichtung die Drehgeschwindigkeit der um ihre Längsachse (2i) drehbaren Festhalte- und Transportvorrichtung (2) steuert, **dadurch gekennzeichnet, dass**
- die Auspressgeschwindigkeit des kreiszylindrischen Körpers (4) aus dem Strangpresswerkzeug (1) mittels eines Geschwindigkeitssensors (14) gemessen wird und der Durchmesser des aus dem Strangpresswerkzeug (1) ausgegebenen kreiszylindrischen Körpers (4) mittels eines Durchmessersensors (15) gemessen wird,
- die Vorschubgeschwindigkeit und die Drehgeschwindigkeit der Festhalte- und Transportvorrichtung (2) von einer Steuereinheit (10) eingestellt werden, welche Sensorsignale (s1, s2) vom Geschwindigkeitssensor (14) und vom Durchmessersensor (15) erhält und dann dem Vorschubmotor (5) und dem Drehmotor (6) Steuersignale (st1, st2) zur Einstellung der Vorschubgeschwindigkeit und der Drehgeschwindigkeit der Festhalte- und Transportvorrichtung (2) zuführt,
- wobei die Steuereinheit (10) die ihr zugeführten Sensorsignale (s1, s2) mit vorgegebenen Sollsteigungswerten, die sich aus der Transportgeschwindigkeit und der Drehgeschwindigkeit der Festhalte- und Transportvorrichtung (2) ergibt, in Einklang bringt.

2. Verfahren nach Anspruch 1, **dadurch gekennzeichnet, dass** der kreiszylindrische Körper (4) innerhalb der Festhalte- und Transportvorrichtung (2) von Transportbändern (2e, 2f) gehalten und in Richtung seiner Längsachse fortbewegt wird.

3. Verfahren nach einem der vorhergehenden Ansprüche, **dadurch gekennzeichnet, dass** die Transportbänder (2e, 2f) auf Umlenkrollen (2a, 2b, 2c, 2d) gelagert sind, deren Laufgeschwindigkeit zur Fortbewegung des kreiszylindrischen Körpers (4) vom Vorschubmotor (5) eingestellt wird.

4. Verfahren nach Anspruch 2 oder 3, **dadurch gekennzeichnet, dass** der kreiszylindrische Körper (4) innerhalb der Festhalte und Transportvorrichtung (2) von zwei, drei oder vier mit einheitlicher Geschwindigkeit bewegten Transportbändern (2e, 2f) gehalten und in Richtung seiner Längsachse fortbewegt wird.

5. Verfahren nach einem der vorhergehenden Ansprüche, **dadurch gekennzeichnet, dass** der kreiszylindrische Körper (4) mittels einer Schneidevorrichtung (11) auf eine vorgegebene Länge abgelängt wird, wobei das Ablängen zwischen dem Strangpresswerkzeug (1) und der drehbaren Festhalte- und Transportvorrichtung (2) oder zwischen der drehbaren Festhalte- und Transportvorrichtung (2) und der Ablagevorrichtung (3) vorgenommen wird.

6. Vorrichtung zur Herstellung eines aus plastischer Masse bestehenden kreiszylindrischen Körpers (4), der mindestens eine in seinem Inneren verlaufende wendeiförmige Ausnehmung (9) aufweist, mit

    - einem zum Herstellen eines aus plastischer Masse bestehenden kreiszylindrischen Körpers (4), der mindestens eine in seinem Inneren verlaufende geradlinige Innenausnehmung aufweist, ausgebildeten Strangpresswerkzeug (1),

    - einer zum Festhalten und Transportieren des kreiszylindrischen Körpers (4) ausgebildeten, um ihre Längsachse (2i) drehbaren Festhalte- und Transportvorrichtung (2)

    - einer zur Aufnahme des aus der Festhalte- und Transportvorrichtung (2) ausgegebenen kreiszylindrischen Körpers (4), der mindestens eine in seinem Inneren verlaufende wendeiförmige Innenausnehmung (9) hat, ausgebildeten Ablagevorrichtung (3)

    - einem Vorschubmotor (5), der zur Steuerung der Vorschubgeschwindigkeit des kreiszylindrischen Körpers (4) in der drehbaren Festhalte- und Transportvorrichtung (2) ausgebildet ist,

    - einem Drehmotor (6), der zur Steuerung der Drehgeschwindigkeit der um ihre Längsachse (2i) drehbaren Festhalte- und Transportvorrichtung (2) ausgebildet ist **gekennzeichnet durch**

    - eine Steuereinheit (10), die dazu ausgebildet ist, dem Vorschubmotor (5) und dem Drehmotor (6) Steuersignale (st1, st2) zur Einstellung der Vorschubgeschwindigkeit und der Drehgeschwindigkeit zuzuführen,

    - einem zur Messung der Auspressgeschwindigkeit des kreiszylindrischen Körpers (4) aus dem Strangpresswerkzeug (1) ausgebildeten Geschwindigkeitssensor (14) und

    - einem zur Messung des Durchmesser des aus dem Strangpresswerkzeug (1) ausgegebenen kreiszylindrischen Körpers (4) ausgebildetem Durchmessersensor (15), wobei

    - die Steuereinheit (10) des Weiteren dazu ausgebildet ist, die Vorschubgeschwindigkeit und die Drehgeschwindigkeit der Festhalte- und Transportvorrichtung (2) einzustellen, indem sie Sensorsignale (s1, s2) vom Geschwindigkeitssensor (14) und vom Durchmessersensor (15) erhält und dann dem Vorschubmotor (5) und dem Drehmotor (6) Steuersignale (st1, st2) zur Einstellung der Vorschubgeschwindigkeit und der Drehgeschwindigkeit der Festhalte- und Transportvorrichtung (2) zuführt, wobei die Steuereinheit (10) die ihr zugeführten Sensorsignale (s1, s2) mit vorgegebenen Sollsteigungswerten, die sich aus der Transportgeschwindigkeit und der Drehgeschwindigkeit der Festhalte- und Transportvorrichtung (2) ergibt, in Einklang bringt.

**7.** Vorrichtung nach Anspruch 6, **dadurch gekennzeichnet, dass** die Festhalte- und Transportvorrichtung (2) Transportbänder (2e, 2f) aufweist, die zum Festhalten und zur Fortbewegung des kreiszylindrischen Körpers (4) in seiner Längsrichtung ausgebildet sind.

**8.** Vorrichtung nach Anspruch 7, **dadurch gekennzeichnet, dass** die Transportbänder (2e, 2f) auf Umlenkrollen (2a, 2b, 2c, 2d) gelagert sind, deren Laufgeschwindigkeit mittels des Vorschubmotors (5) einstellbar ist.

**9.** Vorrichtung nach Anspruch 7 oder 8, **dadurch gekennzeichnet, dass** sie zwei, drei oder vier in Umfangsrichtung des kreiszylindrischen Körpers (4) vorzugsweise äquidistant verteilte Transportbänder (2e, 2f) aufweist.

**10.** Vorrichtung nach einem der Ansprüche 6 bis 9, **dadurch gekennzeichnet, dass** sie eine Schneidevorrichtung (11) zur Ablängung des kreiszylindrischen Körpers (4) aufweist, welche zwischen dem Strangpresswerkzeug (1) und der Festhalte- und Transportvorrichtung (2) oder zwischen der drehbaren Festhalte- und Transportvorrichtung (2) und der Ablagevorrichtung (3) angeordnet ist.

**Claims**

**1.** Method for producing a circular-cylindrical body (4) which consists of plastic compound and which has at least one helical inner cavity (9) running in its interior, comprising the following steps:

    - producing a circular-cylindrical body (4), which consists of plastic compound and which has at least one rectilinear inner cavity running in its interior, by means of an extrusion die (1),

    - discharging the circular-cylindrical body (4) out of the extrusion die (1) via a twisting section (7) to a retaining and transporting device (2) which is designed to retain and transport the circular-cylindrical body (4) and which can be rotated about its longitudinal axis (2i) ,

    - twisting the circular-cylindrical body (4) on the twisting section (7) to form the at least one helical inner cavity (9) by rotating the retaining and transporting device (2) with circular-cylindrical body (4) held and transported therein, and

    - discharging the circular-cylindrical body (4), which has at least one helical inner cavity (9) running in its interior out of the retaining and transporting device (2) onto a set-down device (3), wherein

    - the retaining and transporting device (2), which can be rotated about its longitudinal axis (2i), is controlled by two motors, of which one is a feed motor (5) which controls the speed of the feed of the circular-cylindrical body (4) in the rotatable retaining and transporting device (2), and the other is a rotary motor (6) which, simultaneously to the circular-cylindrical body (4) being fed in the longitudinal direction, controls the rotational speed of the retaining and transporting device (2) which can be rotated about its longitudinal axis (2i),
**characterized in that**

- the pressing-out speed of the circular-cylindrical body (4) out of the extrusion die (1) is measured by means of a speed sensor (14), and the diameter of the circular-cylindrical body (4) discharged from the extrusion die (1) is measured by means of a diameter sensor (15),
- the feed speed and the rotational speed of the retaining and transporting device (2) are set by a control unit (10) which receives sensor signals (s1, s2) from the speed sensor (14) and from the diameter sensor (15) and then feeds control signals (st1, st2) to the feed motor (5) and the rotary motor (6) in order to set the feed speed and the rotational speed of the retaining and transporting device (2),
- wherein the control unit (10) harmonizes the sensor signals (s1, s2) fed thereto with predetermined desired pitch values which result from the transporting speed and the rotational speed of the retaining and transporting device (2).

2. Method according to Claim 1, **characterized in that** the circular-cylindrical body (4) is held within the retaining and transporting device (2) by transport belts (2e, 2f) and is moved along in the direction of its longitudinal axis.

3. Method according to either of the preceding claims, **characterized in that** the transport belts (2e, 2f) are mounted on deflection rollers (2a, 2b, 2c, 2d) whose running speed to move the circular-cylindrical body (4) along is set by the feed motor (5).

4. Method according to Claim 2 or 3, **characterized in that** the circular-cylindrical body (4) is held within the retaining and transporting device (2) by two, three or four transport belts (2e, 2f) moved with uniform speed and is moved along in the direction of its longitudinal axis.

5. Method according to one of the preceding claims, **characterized in that** the circular-cylindrical body (4) is cut to a predetermined length by means of a cutting device (11), wherein the cutting-to-length operation is carried out between the extrusion die (1) and the rotatable retaining and transporting device (2) or between the rotatable retaining and transporting device (2) and the set-down device (3).

6. Device for producing a circular-cylindrical body (4) which consists of plastic compound and which has at least one helical cavity (9) running in its interior, comprising

- an extrusion die (1) which is designed to produce a circular-cylindrical body (4) which consists of plastic compound and which has at least one rectilinear inner cavity running in its interior,
- a retaining and transporting device (2) which is designed to retain and transport the circular-cylindrical body (4) and which can be rotated about its longitudinal axis (2i),
- a set-down device (3) which is designed to receive the circular-cylindrical body (4) which is discharged from the retaining and transporting device (2) and which has at least one helical inner cavity (9) running in its interior,
- a feed motor (5) which is designed to control the feed speed of the circular-cylindrical body (4) in the rotatable retaining and transporting device (2),
- a rotary motor (6) which is designed to control the rotational speed of the retaining and transporting device (2) which is rotatable about its longitudinal axis (2i), **characterized by**

- a control unit (10) which is designed to feed control signals (st1, st2) to the feed motor (5) and the rotary motor (6) in order to set the feed speed and the rotational speed,
- a speed sensor (14) which is designed to measure the pressing-out speed of the circular-cylindrical body (4) out of the extrusion die (1), and
- a diameter sensor (15) which is designed to measure the diameter of the circular-cylindrical body (4) discharged from the extrusion die (1), wherein
- the control unit (10) is further designed to set the feed speed and the rotational speed of the retaining and transporting device (2) in that it receives sensor signals (s1, s2) from the speed sensor (14) and from the diameter sensor (15) and then feeds control signals (st1, st2) to the feed motor (5) and the rotary motor (6) in order to set the feed speed and the rotational speed of the retaining and transporting device (2), wherein the control unit (10) harmonizes the sensor signals (s1, s2) fed thereto with predetermined desired pitch values which result from the transporting speed and the rotational speed of the retaining and transporting device (2).

7. Device according to Claim 6, **characterized in that** the retaining and transporting device (2) has transport belts (2e, 2f) which are designed to retain and to move the circular-cylindrical body (4) along in its longitudinal direction.

8. Device according to Claim 7, **characterized in that** the transport belts (2e, 2f) are mounted on deflection rollers (2a, 2b, 2c, 2d) whose running speed can be set by means of the feed motor (5).

9. Device according to Claim 7 or 8, **characterized in that** it has two, three or four transport belts (2e, 2f) which are preferably distributed equidistantly in the circumferential direction of the circular-cylindrical body (4).

10. Device according to one of Claims 6 to 9, **characterized in that** it has a cutting device (11) for cutting the circular-cylindrical body (4) to length, said cutting device being arranged between the extrusion die (1) and the retaining and transporting device (2) or between the rotatable retaining and transporting device (2) and the set-down device (3).

**Revendications**

1. Procédé pour la fabrication d'un corps cylindrique circulaire (4) constitué d'une matière plastique, qui présente au moins un évidement intérieur hélicoïdal (9) s'étendant en son sein, avec les étapes suivantes :

    - la fabrication d'un corps cylindrique circulaire (4) constitué d'une matière plastique, qui présente au moins un évidement intérieur rectiligne s'étendant en son sein, au moyen d'un outil de presse à extruder (1),
    - la sortie du corps cylindrique circulaire (4) hors de l'outil de presse à extruder (1) en passant par un parcours de tourbillonnement (7) sur un dispositif de retenue et de transport (2) réalisé pour la retenue et le transport du corps cylindrique circulaire (4), pouvant tourner autour de son axe longitudinal (2i),
    - le tourbillonnement du corps cylindrique circulaire (4) sur le parcours de tourbillonnement (7) pour la formation de l'au moins un évidement intérieur hélicoïdal (9) par une rotation du dispositif de retenue et de transport (2) avec le corps cylindrique circulaire (4) retenu et transporté dans celui-ci et
    - la sortie du corps cylindrique circulaire (4), qui présente au moins un évidement intérieur hélicoïdal (9) s'étendant en son sein, hors du dispositif de retenue et de transport (2) sur un dispositif de dépose (3), dans lequel
    - le dispositif de retenue et de transport (2) pouvant tourner autour de son axe longitudinal (2i) est commandé par deux moteurs, dont un est un moteur d'avance (5), qui commande la vitesse de l'avance du corps cylindrique circulaire (4) dans le dispositif de retenue et de transport (2) rotatif, et l'autre est un moteur rotatif (6), qui commande en même temps que l'avance du corps cylindrique circulaire (4) dans la direction longitudinale la vitesse de rotation du dispositif de retenue et de transport (2) pouvant tourner autour de son axe longitudinal (2i),
    **caractérisé en ce que**
    - la vitesse de pressage du corps cylindrique circulaire (4) hors de l'outil de presse à extruder (1) est mesurée au moyen d'un capteur de vitesse (14) et le diamètre du corps cylindrique circulaire (4) sorti de l'outil de presse à extruder (1) est mesuré au moyen d'un capteur de diamètre (15),
    - la vitesse d'avance et la vitesse de rotation du dispositif de retenue et de transport (2) sont réglées par une unité de commande (10), laquelle reçoit des signaux de capteur (s1, s2) du capteur de vitesse (14) et du capteur de diamètre (15) et ensuite amène au moteur d'avance (5) et au moteur rotatif (6) des signaux de commande (st1, st2) pour le réglage de la vitesse d'avance et de la vitesse de rotation du dispositif de retenue et de transport (2),
    - dans lequel l'unité de commande (10) harmonise les signaux de capteur (s1, s2) qui lui sont amenés avec des valeurs de pente théoriques prédéfinies, qui résultent de la vitesse de transport et de la vitesse de rotation du dispositif de retenue et de transport (2).

2. Procédé selon la revendication 1, **caractérisé en ce que** le corps cylindrique circulaire (4) est retenu à l'intérieur du dispositif de retenue et de transport (2) par des bandes de transport (2e, 2f) et déplacé en direction de son axe longitudinal.

3. Procédé selon l'une quelconque des revendications précédentes, **caractérisé en ce que** les bandes de transport (2e, 2f) sont montées sur des poulies de renvoi (2a, 2b, 2c, 2d), dont la vitesse de marche pour le déplacement du corps cylindrique circulaire (4) est réglée par le moteur d'avance (5) .

4. Procédé selon la revendication 2 ou 3, **caractérisé en ce que** le corps cylindrique circulaire (4) est retenu à l'intérieur du dispositif de retenue et de transport (2) par deux, trois ou quatre bandes de transport (2e, 2f) mues à une vitesse uniforme et déplacé en direction de son axe longitudinal.

5. Procédé selon l'une quelconque des revendications précédentes, **caractérisé en ce que** le corps cylindrique circulaire (4) est mis à une longueur prédéfinie au moyen d'un dispositif de découpage (11), dans lequel la mise à longueur est réalisée entre l'outil de presse à extruder (1) et le dispositif de retenue et de transport (2) rotatif ou entre le dispositif de retenue et de transport (2) rotatif et le dispositif de dépose (3).

6. Dispositif pour la fabrication d'un corps cylindrique circulaire (4) constitué d'une matière plastique, qui présente au moins un évidement hélicoïdal (9) s'étendant en son sein, avec :

    - un outil de presse à extruder (1) réalisé pour la fabrication d'un corps cylindrique circulaire (4) constitué d'une matière plastique, qui présente au moins un évidement intérieur rectiligne s'étendant en son sein,
    - un dispositif de retenue et de transport (2) réalisé pour la retenue et le transport du corps cylindrique circulaire (4), pouvant tourner autour de son axe longitudinal (2i),
    - un dispositif de dépose (3) réalisé pour la réception du corps cylindrique circulaire (4) sorti du dispositif de retenue et de transport (2), qui présente au moins un évidement intérieur hélicoïdal (9) s'étendant en son sein,
    - un moteur d'avance (5), qui est réalisé pour la commande de la vitesse d'avance du corps cylindrique circulaire (4) dans le dispositif de retenue et de transport (2) rotatif,
    - un moteur rotatif (6), qui est réalisé pour la commande de la vitesse de rotation du dispositif de retenue et de transport (2) pouvant tourner autour de son axe longitudinal (2i),
    **caractérisé par**

    - une unité de commande (10), qui est réalisée pour amener au moteur d'avance (5) et au moteur rotatif (6) des signaux de commande (st1, st2) pour le réglage de la vitesse d'avance et de la vitesse de rotation,
    - un capteur de vitesse (14) réalisé pour la mesure de la vitesse de pressage du corps cylindrique circulaire (4) hors de l'outil de presse à extruder (1)
    et
    - un capteur de diamètre (15) réalisé pour la mesure du diamètre du corps cylindrique circulaire (4) sorti de l'outil de presse à extruder (1),
    dans lequel

        - l'unité de commande (10) est réalisée en outre pour régler la vitesse d'avance et la vitesse de rotation du dispositif de retenue et de transport (2), du fait qu'elle reçoit des signaux de capteur (s1, s2) du capteur de vitesse (14) et du capteur de diamètre (15) et ensuite amène au moteur d'avance (5) et au moteur rotatif (6) les signaux de commande (st1, st2) pour le réglage de la vitesse d'avance et de la vitesse de rotation du dispositif de retenue et de transport (2), dans lequel l'unité de commande (10) harmonise les signaux de capteur (s1, s2) qui lui sont amenés avec des valeurs de pente théoriques prédéfinies, qui résultent de la vitesse de transport et de la vitesse de rotation du dispositif de retenue et de transport (2).

7. Dispositif selon la revendication 6, **caractérisé en ce que** le dispositif de retenue et de transport (2) présente des bandes de transport (2e, 2f), qui sont réalisées pour la retenue et pour le déplacement du corps cylindrique circulaire (4) dans sa direction longitudinale.

8. Dispositif selon la revendication 7, **caractérisé en ce que** les bandes de transport (2e, 2f) sont montées sur des poulies de renvoi (2a, 2b, 2c, 2d), dont la vitesse de marche est réglable au moyen du moteur d'avance (5).

9. Dispositif selon la revendication 7 ou 8, **caractérisé en ce qu'**il présente deux, trois ou quatre bandes de transport (2e, 2f) réparties de manière équidistante dans la direction périphérique du corps cylindrique circulaire (4).

10. Dispositif selon l'une quelconque des revendications 6 à 9, **caractérisé en ce qu'**il présente un dispositif de découpage (11) pour la mise à longueur du corps cylindrique circulaire (4), lequel est disposé entre l'outil de presse à extruder (1) et le dispositif de retenue et de transport (2) ou entre le dispositif de retenue et de transport (2) rotatif et le dispositif de dépose (3).

FIG.1

## Fig. 2

# Fig. 3

FIG.4

2e
2a
2g
9
4
9
2c
2f
P2
P2
P2

FIG.5

2e
2a
9
4
9
2c
2f
P2
P2
P2

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1230046 B1
- EP 2313218 B1
- JP H02138404 A
- WO 8806089 A2
- JP H08127056 A